# EUROPÄISCHE PATENTANMELDUNG

(11) **EP 2 116 797 A2**
(43) Veröffentlichungstag der Anmeldung: **11.11.2009**
(21) Anmeldenummer: 09004165.8
(22) Anmeldetag: 24.03.2009
(51) Int. Cl.: F25B 30/02, F24D 11/02

(54) **Wärmepumpe**

(30) Priorität: 05.05.2008 DE 102008022150; 13.05.2008 DE 102008023254; 12.11.2008 DE 202008015009 U
(71) Anmelder: MHG Heiztechnik GmbH, 21244 Buchholz in der Nordheide (DE)
(72) Erfinder: Niedermayer, Markus, 21244 Buchholz (DE)
(74) Vertreter: Richter, Werdermann, Gerbaulet & Hofmann

(57) **Zusammenfassung**

Um eine Wärmepumpe (100), insbesondere Luft-/Wasserwärmepumpe, zur Erwärmung und/oder Kühlung von Heizkreisläufen und/oder Brauchwasserkreisläufen von Gebäuden möglichst benutzerfreundlich auszubilden, wird eine Wärmepumpe (100) vorgesehen, die eine Inneneinheit (1) und eine mittels Leitungen (9) mit der Inneneinheit (1) zum Wärmetransfer verbundene Außeneinheit (2) umfasst, wobei ein Verflüssiger (4) in der Inneneinheit (1) und ein Verdichter (6) und ein Verdampfer (5) in der Außeneinheit (2) vorgesehen sind.

## Beschreibung

Die Erfindung betrifft eine Wärmepumpe, insbesondere eine Luft-/Wasserwärmepumpe, zur Erwärmung und/oder Kühlung von Heizkreisläufen und/oder von Brauchwasserkreisläufen von Gebäuden. Wärmepumpen sind Vorrichtungen, die unter Zufuhr von Energie Wärme von einem niedrigeren Temperaturniveau auf ein höheres heben (pumpen). Die Bereitstellung der Heizwärme erfolgt durch Verdampfung eines Kältemittels in einem Verdampfer, welches anschließend in einem Kompressor oder Verdichter komprimiert wird, wodurch sich das Kältemittel weiter erwärmt. Nachfolgend wird dem Kältemittel im Verflüssiger die Wärme entzogen und auf ein Wärmeträgermedium, beispielsweise Heizungswasser oder Brauchwasser, übertragen. Das verflüssigte Kältemittel wird anschließend in einem Drosselorgan entspannt und wiederum von Neuem dem Verdampfer zugeführt.

Es ist bekannt, Wärmepumpen der oben beschriebenen Art derart auszubilden, dass sie im reversiblen Betrieb fahrbar sind und somit eine Kühlung anstatt einer Erwärmung bewirken. Je nach Einsatzzweck, d. h. ob eine Kühl- oder eine Heizaufgabe gefordert ist, spricht man auch von Kältemaschinen oder von Wärmepumpenheizungen.

Insbesondere im Zuge der verstärkten Verbreitung erneuerbarer Energien werden Wärmepumpen zunehmend häufiger zur Erwärmung und/oder Kühlung von Gebäuden bzw. von Heizwasser- und/oder BrauchwasserKreisläufen eingesetzt. Eine mögliche Ausführungsart derartiger Wärmepumpen sind die sogenannten Luft-/Wasserwärmepumpen, bei denen mittels einer außerhalb des zu erwärmenden bzw. kühlenden Gebäudes angeordneten Außeneinheit der Umgebungsluft Wärme entzogen wird. Die Außeneinheit ist mittels Kühlmittelleitungen mit einer Inneneinheit der Luft-/Wasserwärmepumpe verbunden, an die die Wärmeenergie mittels des Kühlmittels transferiert und dort an den Heizkreislauf und/oder Brauchwasserkreislauf abgegeben wird.

Die Inneneinheit der Wärmepumpe ist innerhalb des zu erwärmenden bzw. abzukühlenden Gebäudes angeordnet, um im Wärmeaustausch mit dem Heizwasser- bzw. Brauchwasserkreislauf zu stehen. Entsprechend muss innerhalb des Gebäudes ein gesonderter Platz für die Inneneinheit der Wärmepumpe zur Verfügung gestellt werden. Ferner weisen die Inneneinheiten der bekannten Wärmepumpen im Betrieb eine gewisse Geräuschentwicklung auf, die von den im Gebäude lebenden bzw. sich aufhaltenden Personen häufig als störend empfunden wird.

Es ist daher Aufgabe der vorliegenden Erfindung, eine Wärmepumpe der eingangs genannten Art zur Verfügung zu stellen, die möglichst benutzerfreundlich ausgebildet ist.

Diese Aufgabe wird durch eine Wärmepumpe mit den Merkmalen des Anspruches 1 gelöst.

Der Kerngedanke der Erfindung besteht demnach darin, eine Wärmepumpe der eingangs genannten Art mit einer Inneneinheit, die im Inneren eines zu erwärmenden bzw. zu kühlenden Gebäudes angeordnet ist, und mit einer Außeneinheit, die außerhalb des Gebäudes angeordnet und mittels Leitungen mit der Inneneinheit zum Wärmetransfer verbunden ist, vorzusehen, bei der ein Verflüssiger in der Inneneinheit und ein Verdichter und ein Verdampfer in der Außeneinheit vorgesehen sind. Durch den in der Inneneinheit vorgesehenen Verflüssiger bzw. Kondensator, der beispielsweise als Rohrbündel- oder Plattenwärmetauscher ausgebildet sein kann, wird die im Kältemittel vorhandene Wärmeenergie auf ein weiteres Wärmeträgermedium, beispielsweise Heizwasser oder Brauchwasser, übertragen. Im Gegensatz dazu nimmt der in der Außeneinheit angeordnete Verdampfer, der ebenfalls als Wärmetauscher bzw. Wärmeübertrager ausgebildet sein kann, Energie aus der Umgebungsluft auf. Wird die erfindungsgemäße Wärmepumpe im reversiblen Betrieb gefahren, dient der außerhalb des Gebäudes in der Außeneinheit angeordnete Verdampfer als Verflüssiger und der im Gebäude in der Inneneinheit angeordnete Verflüssiger als Verdampfer.

Im Gegensatz zu den aus dem Stand der Technik bekannten, herkömmlichen Wärmepumpen wird nun bei der vorliegenden Erfindung erstmals der Verdichter bzw. Kompressor zusammen mit dem Verdampfer in der Außeneinheit, d. h. außerhalb des Gebäudes, vorgesehen. Hierdurch wird erreicht, dass die innerhalb des Gebäudes angeordnete Inneneinheit der Wärmepumpe sehr viel kleiner, kompakter und leichter ausgebildet sein kann als bei den aus dem Stand der Technik bekannten Systemen, da der relativ sperrige und schwere Verdichter nach außerhalb des Gebäudes ausgelagert wird.

Zum einen ist beim erfindungsgemäßen System vorteilhaft, dass die Inneneinheit besonders kompakt und damit platzsparend ausgebildet sein kann. Dadurch kann der im Gebäude zur Verfügung stehende Raum effektiver genutzt werden. Zum anderen wird durch die Auslagerung des Verdichters der Betriebsgeräuschpegel der Inneneinheit deutlich reduziert, so dass die erfindungsgemäße Wärmepumpe von sich im Gebäude aufhaltenden Personen als deutlich angenehmer als die aus dem Stand der Technik bekannten Systeme empfunden wird.

Durch den relativ großen Raumbedarf und die lauten Betriebsgeräusche der bekannten Wärmepumpenvorrichtungen sind für diese innerhalb eines Gebäudes regelmäßig eigene Räume, beispielsweise Heizungskeller, Hauswirtschaftsräume, etc., vorgesehen. Durch den geringen Geräuschpegel und die kompakte Ausbildung der erfindungsgemäßen Wärmepumpe ist es nun möglich, die Inneneinheit der Wärmepumpe in regulären Wohn- bzw. Aufenthaltsräumen von Gebäuden, beispielsweise einer Küche, anzuordnen, da der Platzbedarf gering und der Geräuschpegel im Betrieb äußerst niedrig ist.

Bevorzugte Ausführungsformen der Erfindung sind in den Unteransprüchen gekennzeichnet.

Bei einer bevorzugten Ausführungsform der Erfindung werden die Inneneinheit und/oder die Außeneinheit jeweils von einem Gehäuse umfasst bzw. eingeschlossen. Mit anderen Worten sind sämtliche Bauteile bzw. Komponenten der Inneneinheit und/oder der Außeneinheit innerhalb eines Gehäuses angeordnet, was eine kompakte Ausbildung der Einheiten und einen geringeren Installationsbedarf der Anlage mit sich bringt. Insbesondere sind bei dieser Ausführungsform der Verdampfer und der Verdichter zusammen in einem Gehäuse der Außeneinheit angeordnet.

Durch die kompakte und leichte Ausbildung der Inneneinheit ist es nunmehr zweckmäßigerweise möglich, die Inneneinheit zur Aufhängung an einer Gebäudewand auszubilden. Bekannte Inneneinheiten von Wärmepumpen sind dagegen aufgrund des hohen Gewichtes und der Größe sowie der Geräuschübertragung an die Wand grundsätzlich auf dem Boden stehend angeordnet. Für die wandhängende Ausführung der Inneneinheit wird bevorzugterweise eine Haltevorrichtung zur Montage der Inneneinheit an der Gebäudewand vorgesehen. Hierdurch kann die Inneneinheit besonders platzsparend im Gebäude vorgesehen werden und erlaubt eine gewisse Bodenfreiheit unterhalb der Inneneinheit sowie eine bessere Raumausnutzung.

Zweckmäßigerweise beträgt das Gewicht der Inneneinheit gemäß der vorliegenden Erfindung 35 kg bis 70 kg, bevorzugt 45 kg bis 60 kg, besonders bevorzugt 50 kg bis 55 kg. Hierdurch kann die kompakte sowie auch die wandhängende Ausbildung der Inneneinheit der Wärmepumpe gewährleistet werden.

In einer weiteren bevorzugten Ausführungsform der Wärmepumpe ist die Leistung der Wärmepumpe einstellbar. Insbesondere ist es bevorzugt, wenn die Leistung der Wärmepumpe zwischen 1 kW und 15 kW, besonders bevorzugt zwischen 3,5 kW und 10,5 kW, modulierbar ist, Im Gegensatz dazu sind bekannte Wärmepumpen für Gebäude einstufig ausgebildet und auf eine fest vorgegebene Leistung beschränkt. Dagegen muss durch die flexible Leistungsanpassung der Wärmepumpe in der vorliegenden Ausführungsform das System nicht auf die individuellen Vor-Ort-Gegebenheiten ausgelegt, sondern kann flexibel an diese angepasst werden, so dass die Herstellungskosten insgesamt reduziert werden können. Ferner bringt die beschriebene Ausführungsform energetische Vorteile mit sich. Zweckmäßigerweise ist eine Regelungseinrichtung an der Wärmepumpe vorgesehen, die die Leistung der Wärmepumpe entsprechend den jeweilig vorliegenden Bedingungen automatisch moduliert.

Weiterhin umfasst die erfindungsgemäße Wärmepumpe zweckmäßigerweise ein Drosselorgan, insbesondere ein Expansionsventil, das vorteilhafterweise, ebenso wie der Verdampfer und der Verdichter, in der Außeneinheit anzuordnen ist, um den Platzbedarf der Inneneinheit weiter zu reduzieren.

Um mögliche Bedarfsspitzen abzudecken, kann in der Inneneinheit der Wärmepumpe zweckmäßigerweise eine zusätzliche elektrische Heizvorrichtung vorgesehen sein.

In einer weiteren bevorzugten Ausführungsform der Erfindung ist die erfindungsgemäße Wärmepumpe in eine Heizzentrale für eine Heizanlage zur Wärmeenergieversorgung von Gebäuden, mit einem Gehäuse, innerhalb dessen ein Pufferspeicherbehälter zur Wärmespeicherung und -abgabe, eine erste Wärmequelle, die mit einem Pufferspeicherbehälter zum Wärmeaustausch verbunden ist, und eine zweite Wärmequelle, die mit einem Pufferspeicherbehälter zum Wärmeaustausch verbunden ist, angeordnet sind, integriert, wobei die Inneneinheit der erfindungsgemäßen Wärmepumpe die erste Wärmequelle bildet. Dadurch, dass sämtliche genannten Komponenten der Heizanlage innerhalb eines Gehäuses angeordnet sind, ergibt sich eine äußerst kompakte Ausbildung der Heizzentrale. Durch die kompakte Ausbildung der Inneneinheit der Wärmepumpe wird dieser Aspekt weiter verbessert. Somit ist es nun auch bei Niedrigenergiehäusern u. dgl. möglich, eine einzige, innerhalb eines Gehäuses eingeschlossene Heizzentrale im Gebäude vorzusehen, in der alle relevanten Komponenten der Heizanlage enthalten sind und an die nur noch die notwendigen Leitungen, beispielsweise des Heizkreises oder des Brauchwasserkreises, angeschlossen werden müssen. Das technische Grundprinzip derartiger Heizzentralen ist beispielsweise in der deutschen Patentanmeldung Nr. 10 2008 023 254.8 der Anmelderin ausführlich beschrieben. Die dortigen, diesbezüglichen Ausführungen werden hiermit durch ausdrückliche Bezugnahme zum Bestandteil dieser Anmeldung gemacht.

In einer weiteren bevorzugten Ausführungsform der Erfindung ist innerhalb des Gehäuses der Heizzentrale ein erster Wärmetauscher zum Wärmeaustausch mit dem Pufferspeicherbehälter vorgesehen, der mit einer dritten Wärmequelle verbindbar ist. Die dritte Wärmequelle wird normalerweise eine externe Wärmequelle sein, die über entsprechende Leitungen mit dem dafür in der Heizzentrale vorgesehenen ersten Wärmetauscher zu verbinden ist. Grundsätzlich wäre es aber auch möglich, eine weitere, dritte Wärmequelle im Gehäuse der Heizzentrale vorzusehen.

Wärmetauscher sind üblicherweise als Heizschlangen bzw. -wendeln ausgeführt, in denen ein Wärmemittel, z. B. Wasser, angeordnet ist und die innerhalb des Pufferspeicherbehälters verlaufen, so dass Wärmeenergie von den Heizschlangen an das innerhalb des Pufferspeicherbehälters befindliche Wärmeträgermedium (z. B. Wasser) übertragen werden kann. Ferner sollte zweckmäßigerweise im Pufferspeicherbehälter ein weiterer Wärmetauscher angeordnet sein, der an einen Heizkreis des Gebäudes anschließbar ist. Dieser Wärmetauscher entzieht dem Wärmeträgermedium innerhalb des Pufferspeicherbehälters Wärmeenergie, um diese an die Verbraucher des Heizkreises weiter zu leiten. Ferner wird mit der erfindungsgemäßen Heizzentrale bevorzugterweise das Brauchwasser im Durchlaufverfahren erwärmt, so dass im Pufferspeicherbehälter ein weiterer Wärmetauscher zum Anschluss an den Brauchwasserkreis vorzusehen ist.

In einer weiteren bevorzugten Ausführungsform der Erfindung ist die zweite Wärmequelle ein Brennwertkessel, insbesondere ein durch Öl oder Gas betriebener Brennwertkessel. Ein für die Heizzentrale zu verwendender, geeigneter Gasbrennwertkessel könnte beispielsweise eine maximale Nennwärmebelastung von 25 kW aufweisen. Darüber hinaus ist der erste Wärmetauscher der Heizzentrale bevorzugterweise zum Anschluss an einen Solarkreis eines Solar-Kollektor-Systems vorgesehen. Durch eine derartige Ausführung der ersten und zweiten Wärmequelle und des ersten Wärmetauschers wird die Heizanlage den Anforderungen, die heutzutage an Niedrigenergiehäuser gestellt werden, gerecht. Die Heizzentrale wird zunächst versuchen, den Gebäudeenergiebedarf durch regenerative Energien, nämlich durch im Solarkreis erzeugte Solarenergie und ggf. durch die beispielsweise aus Luft oder Erdwärme gewonnene Energie der Wärmepumpe, zu decken. Nur wenn dieses nicht möglich sein sollte, wird zusätzlich ein Brennwertkessel hinzugeschaltet. Insgesamt wird dadurch der Energieanteil der fossilen Energie verringert.

Alternativ kann anstatt eines Brennwertkessels ein elektrisch betriebener Durchlauferhitzer verwendet werden. Entsprechend wird der Durchlauferhitzer ebenfalls innerhalb des Gehäuses angeordnet und sein Vor- und Rücklauf wird direkt an den Pufferspeicherbehälter angeschlossen. Eine derartig ausgeführte Kompakt-Heizzentrale kommt daher ganz ohne die Verwendung fossiler Brennstoffe aus und benötigt, falls der Gebäudeenergiebedarf nicht durch regenerative Energien allein gedeckt werden kann, ausschließlich elektrische Energie für Ihre internen Wärmequellen (Durchlauferhitzer und Wärmepumpe).

Weiterhin ist es zweckmäßig, ein Anschlussmittel vorzusehen, mittels dessen eine vierte, vorzugsweise externe Wärmequelle mit dem Pufferspeicherbehälter zum Wärmeaustausch verbindbar ist. Hierdurch wird die Flexibilität des Einsatzes der erfindungsgemäßen Heizzentrale weiter verbessert. Je nach den vorhandenen Gegebenheiten des jeweiligen Gebäudes ist es nämlich nun möglich, eventuell vorhandene, weitere Wärmequellen, beispielsweise einen Feststoffbrenner, eine Pelletsheizung, einen Kamin, eine Abwärmeheizung etc., mit dem Heizsystem zu verbinden bzw. diese in die Heizanlage zu integrieren. Hierfür muss lediglich die bereits im Gebäude vorhandene vierte Wärmequelle über in der Heizzentrale bereits vorgesehene entsprechende Anschlüsse angeschlossen werden. Der hiermit verbundene Installations- bzw. Montageaufwand ist äußerst gering. Grundsätzlich ist es ferner möglich in der Wärmezentrale weitere Anschlüsse bzw. Wärmetauscher zum Anschluss weiterer Wärmequellen vorzusehen.

Zweckmäßigerweise ist in die Heizzentrale eine Regelungseinrichtung integriert, die zur Regelung der verschiedenen Wärmequellen bzw. Heizkreise ausgebildet ist. Hierdurch werden die Bedienungsfreundlichkeit der Heizzentrale sowie die Einfachheit der Installation bzw. Montage weiter verbessert. Da die Regelungseinrichtung bereits in der Heizzentrale integriert ist, ist diese zweckmäßigerweise bereits vorprogrammiert, so dass sie die vorhandenen bzw. anzuschließenden Wärmequellen nach einem im Vorwege festgelegten Ablaufschema regelt bzw. ansteuert. Zum einen muss dadurch keine gesonderte Regelungseinrichtung bei der Installation der Heizanlage mehr vorgesehen werden. Zum anderen kann die bereits vorprogrammierte Regelungseinrichtung nach Montage unmittelbar ihren Betrieb aufnehmen und muss nicht mehr vom Benutzer bzw. Monteur gesondert eingestellt werden.

In einer weiteren bevorzugten Ausführungsform der Erfindung wird eine Außeneinheit einer Split-Klimaanlage für Gebäude als Außeneinheit für eine erfindungsgemäße Wärmepumpe verwendet. Split-Klimavorrichtungen sind aus dem Stand der Technik grundsätzlich bekannt und bestehen aus zwei Teilen, einer Inneneinheit, die die Raumluft ansaugt, filtert und kühlt, sowie einer Außeneinheit, die den Kühlkompressor enthält, wobei beide Geräteteile üblicherweise mit einer Schlauchrohrleitung miteinander verbunden werden. Da derartige Außeneinheiten von Split-Klimavorrichtungen als Fertigbauteile im Handel erhältlich sind, kann hierdurch eine besonders einfache und kostengünstige erfindungsgemäße Wärmepumpe geschaffen werden.

Ausführungsbeispiele der Erfindung werden nachstehend anhand der Zeichnungen näher erläutert. Es zeigen schematisch:
- Fig. 1: einen Hydraulikplan einer Wärmepumpe; und
- Fig. 2: einen Hydraulikplan einer Heizzentrale mit einer erfindungs- gemäßen Wärmepumpe.

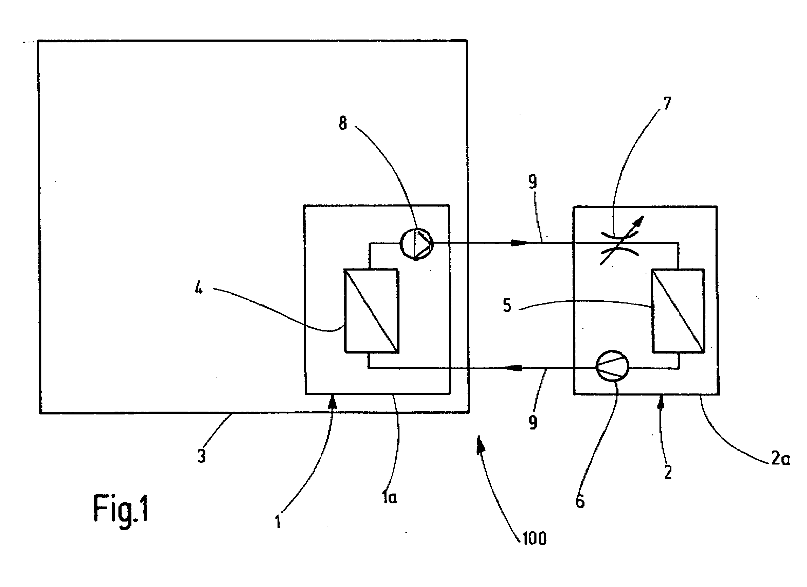

Fig. 1 zeigt einen Hydraulikplan einer erfindungsgemäßen Wärmepumpe 100 zur Erwärmung und/oder Kühlung von Heizkreisläufen und/oder Brauchwasserkreisläufen von Gebäuden. Die vorliegend dargestellte Wärmepumpe 100 ist als Luft-/Wasserwärmepumpe ausgebildet und umfasst eine Inneneinheit 1 mit einem Gehäuse 1a, die innerhalb eines Gebäudes 3 angeordnet ist. Außerhalb des Gebäudes 3 ist eine Außeneinheit 2 mit einem Gehäuse 2a angeordnet. Beide Einheiten 1, 2 sind über Kältemittelleitungen 9, die einen Kältemittelkreislauf bilden, miteinander zum Wärmeaustausch verbunden. In der Außeneinheit 2 ist ein als Wärmetauscher ausgebildeter Verdampfer 5 vorgesehen, der der Umgebungsluft Wärmeenergie entzieht und diese auf das Kühlmittel überträgt. Nach Aufnahme der Wärmeenergie wird das Kältemittel, welches sich nun im gasförmigen Zustand befindet, durch einen ebenfalls innerhalb des Gehäuses 2a der Außeneinheit 2 angeordneten Verdichter 6 komprimiert. Hierdurch wird das Kältemittel weiter erwärmt und anschließend durch die Kältemittelleitungen 9 ins Innere des Gebäudes 3 und zu einem als Wärmetauscher ausgebildeten Verflüssiger 4 der Inneneinheit 1 transportiert. Im Verflüssiger 4 wird dem Kältemittel wieder Wärmeenergie entzogen und an einen Heizwasser- und/oder Brauchwasserkreislauf (hier nicht dargestellt) abgegeben. Danach fließt das Kältemittel zurück zur Außeneinheit 2 und wird durch ein ebenfalls in der Außeneinheit 2 angeordnetes Drosselventil 7 wieder entspannt, bevor es erneut zum Verdampfer 5 fließt. Der dargestellte Kühlmittelkreislauf umfasst ferner eine Umwälzpumpe 8, die in der Inneneinheit 1 angeordnet ist. Die Pfeile stellen die Umlaufrichtung des Kühlmittelkreislaufes im Heizungsbetrieb dar. Soll die reversible Wärmepumpe 100 im Kühlbetrieb gefahren werden, kehrt sich die Richtung des Kühlmittelkreislaufes um. Bei Bedarf kann in der Inneneinheit 1 ferner eine zusätzliche, elektrische Heizung vorgesehen werden (hier nicht dargestellt), die mit dem Verflüssiger 4 bzw. der Kühlmittelleitung 9 gekoppelt wird.

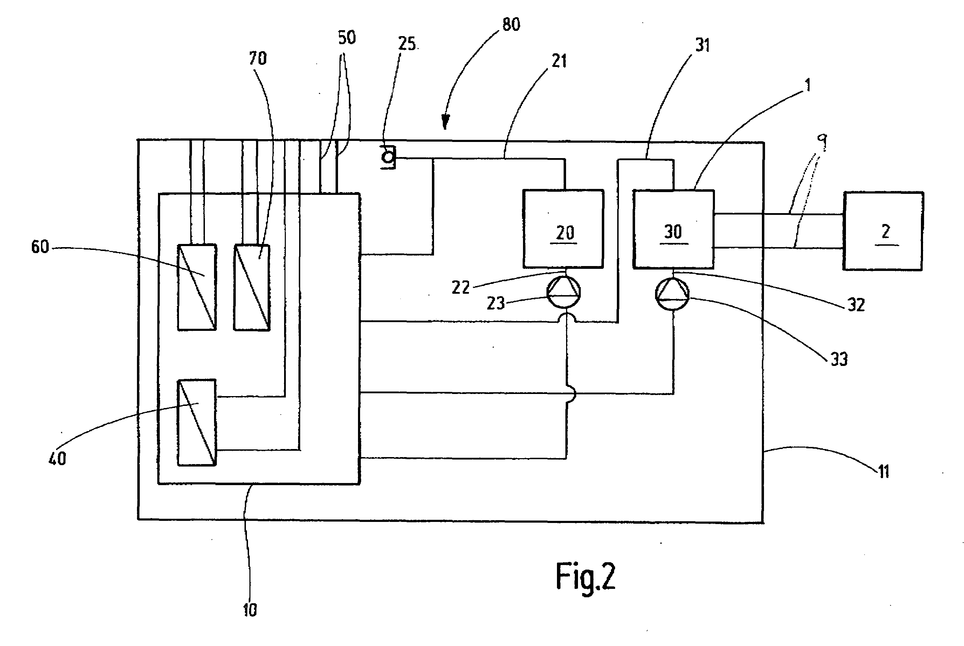

Fig. 2 zeigt einen Hydraulikplan einer Heizzentrale 80 für eine Heizanlage zur Wärmeenergieversorgung von Gebäuden. Die Heizzentrale 80 umfasst ein Gehäuse 11, innerhalb dessen die einzelnen Komponenten der Heizzentrale 80 angeordnet sind. Insbesondere ist innerhalb des Gehäuses 11 ein Pufferspeicherbehälter 10 angeordnet, der zur Aufnahme von Wasser und somit zur Speicherung und Abgabe von Wärmeenergie geeignet ist.

Der Pufferspeicherbehälter 10 ist über dafür vorgesehene Anschlüsse mit einem Vorlauf 21 und einem Rücklauf 22 eines Kesselkreises verbunden, wobei für Vor- und Rücklauf jeweils ein separater Anschluss vorgesehen ist. Dieser Kesselkreis umfasst einen Gasbrennwertkessel 20 (zweite Wärmequelle), einen Vorlauf 21, einen Rücklauf 22, eine Pumpe 23 sowie eine Sicherheitsgruppe 25, die ein Sicherheitsventil umfasst. Der gesamte Kesselkreis 21, 22, 23, 24, 25 ist innerhalb des Gehäuses 11 angeordnet. Ferner ist der Vorlauf 21 in einem oberen Bereich, wohingegen der Rücklauf in einem unteren Bereich an den Pufferspeicherbehälter 10 angeschlossen ist. Das vom Gasbrennwertkessel 20 erwärmte Wasser wird daher in einem oberen Bereich in den Pufferspeicherbehälter 10 eingespeist und kälteres Wasser wird diesem in einem unteren Bereich wieder entnommen.

Ferner sind am Pufferspeicherbehälter 10 Anschlüsse zum Anschluss des Vorlaufs 31 sowie des Rücklaufs 32 eines Wärmepumpenkreises vorgesehen. Der Wärmepumpenkreis umfasst die Inneneinheit 1 einer erfindungsgemäßen Wärmepumpe, wie sie beispielsweise in Fig. 1 dargestellt ist (erste Wärmequelle 30), einen Vorlauf 31, einen Rücklauf 32 sowie eine Pumpe 33. Der Anschluss des Vorlaufes 31 ist ähnlich wie beim Kesselkreis oberhalb des Anschlusses für den Rücklauf 32 am Pufferspeicherbehälter 10 angeordnet, wobei beide Anschlüsse in Bezug auf eine Vertikalachse zwischen den Anschlüssen für den Kesselkreisvorlauf 21 und den Kesselkreisrücklauf 22 angeordnet sind. Ferner sind Kühlmittelleitungen 9 dargestellt, mittels denen die Inneneinheit 1 mit einer korrespondierenden, außerhalb des Gebäudes angeordneten Außeneinheit 2 zum Wärmetransfer verbunden ist. Die Inneneinheit 1 weist zweckmäßigerweise ein Gehäuse auf, mit samt dessen es innerhalb des Gehäuses 11 der Heizzentrale 80 angeordnet ist.

Des Weiteren ist im Pufferspeicherbehälter 10 ein erster Wärmetauscher 40 angeordnet, der zum Anschluss an einen im Gebäude vorhandenen Solarkreis (hier nicht dargestellt) ausgebildet ist. Am Pufferspeicherbehälter 10 angeordnete Anschlüsse 50 sind zum Anschluss an den Kreis einer ebenfalls im zu erwärmenden Gebäude vorhandenen vierten Wärmequelle ausgebildet. Schließlich sind am Pufferspeicherbehälter 10 noch ein Heizkreis-Wärmetauscher 60 sowie ein Brauchwasserkreis-Wärmetauscher 70 angeordnet, die jeweils an einen Heizkreis mit Verbrauchern bzw. einen Brauchwasserkreis anschließbar sind. Alle genannten Wärmetauscher weisen jeweils Anschlüsse für einen Vor- und einen Rücklauf auf. Der Wärmetauscher 40 ist derart ausgebildet, dass er dem im Pufferspeicherbehälter 10 vorhandenen Wärmeträgermedium (Wasser) Wärmeenergie zuführen kann, wohingegen die Wärmetauscher 60, 70 zur Entnahme von Wärmeenergie aus dem Pufferspeicherbehälter 10 ausgebildet sind.

### Bezugszeichenliste

- 100: Wärmepumpe

- 1: Inneneinheit
- 1 a: Gehäuse (Inneneinheit)
- 2: Außeneinheit
- 2a: Gehäuse (Außeneinheit)
- 3: Gebäude
- 4: Verflüssiger
- 5: Verdampfer
- 6: Verdichter
- 7: Drosselventil
- 8: Pumpe (Kühlmittelkreislauf)
- 9: Kältemittelleitungen
- 10: Pufferspeicherbehälter
- 11: Gehäuse

- 20: zweite Wärmequelle / Gasbrennwertkessel
- 21: Vorlauf Kesselkreis
- 22: Rücklauf Kesselkreis
- 23: Pumpe (Kesselkreis)
- 25: Sicherheitsgruppe

- 30: erste Wärmequelle / Inneneinheit Wärmepumpe
- 31: Vorlauf Wärmepumpenkreis
- 32: Rücklauf Wärmepumpenkreis
- 33: Pumpe (Wärmepumpenkreis)

- 40: erster Wärmetauscher / Solar-Wärmetauscher
- 50: Anschluss (für vierte Wärmequelle)
- 60: Heizkreis-Wärmetauscher
- 70: Brauchwasserkreis-Wärmetauscher
- 80: Heizzentrale

## Patentansprüche

1. Wärmepumpe (100), insbesondere Luft-/Wasserwärmepumpe, zur Erwärmung und/oder Kühlung von Heizkreisläufen und/oder Brauchwasserkreisläufen von Gebäuden, umfassend eine Inneneinheit (1) und eine mittels Leitungen (9) mit der Inneneinheit (1) zum Wärmetransfer verbundene Außeneinheit (2), wobei ein Verflüssiger (4) in der Inneneinheit (1) und ein Verdichter (6) und ein Verdampfer (5) in der Außeneinheit (2) vorgesehen sind.

2. Wärmepumpe gemäß Anspruch 1,
**dadurch gekennzeichnet,**
**dass** die Inneneinheit (1) und/oder die Außeneinheit (2) ein Gehäuse (1a, 2a) umfassen, innerhalb dessen die Bauteile der jeweiligen Einheit angeordnet sind.

3. Wärmepumpe gemäß Anspruch 1 oder 2,
**dadurch gekennzeichnet,**
**dass** die Inneneinheit (1) zur Aufhängung an einer Gebäudewand ausgebildet ist und insbesondere eine Haltevorrichtung zur Montage der Inneneinheit (1) an der Gebäudewand umfasst.

4. Wärmepumpe gemäß einem der vorhergehenden Ansprüche,
**dadurch gekennzeichnet,**
**dass** die Inneneinheit (1) ein Gewicht von 35 bis 70 kg, bevorzugt 45 bis 60 kg, besonders bevorzugt 50 bis 55 kg, aufweist.

5. Wärmepumpe gemäß einem der vorhergehenden Ansprüche,
**dadurch gekennzeichnet,**
**dass** die Leistung der Wärmepumpe (100), insbesondere zwischen 1 kW und 15 kW, besonders bevorzugt zwischen 3,5 kW und 10,5 kW, einstellbar ist.

6. Wärmepumpe gemäß einem der vorhergehenden Ansprüche,
**dadurch gekennzeichnet,**
**dass** die Wärmepumpe (100) ein Drosselorgan (7), insbesondere ein Expansionsventil, umfasst, das in der Außeneinheit (2) angeordnet ist.

7. Wärmepumpe gemäß einem der vorhergehenden Ansprüche,
**dadurch gekennzeichnet,**
**dass** die Inneneinheit (1) eine elektrische Zusatzheizvorrichtung umfasst.

8. Verwendung einer Außeneinheit einer Split-Klimavorrichtung als Außeneinheit (2) für eine Wärmepumpe (100) gemäß einem der vorhergehenden Ansprüche.

9. Heizzentrale (80) für eine Heizanlage zur Wärmeenergieversorgung von Gebäuden, mit einem Gehäuse (11), innerhalb dessen ein Pufferspeicherbehälter (10) zur Wärmespeicherung und -abgabe, eine erste Wärmequelle (30), die mit dem Pufferspeicherbehälter (10) zum Wärmeaustausch verbunden ist, und eine zweite Wärmequelle (20), die mit dem Pufferspeicherbehälter (10) zum Wärmeaustausch verbunden ist, angeordnet sind, wobei die erste Wärmequelle (30) die Inneneinheit (1) einer Wärmepumpe (100) gemäß einem der vorhergehenden Ansprüche ist.

10. Heizzentrale gemäß Anspruch 9,
**dadurch gekennzeichnet,**
**dass** ein erster Wärmetauscher (40) zum Wärmeaustausch mit dem Pufferspeicherbehälter (10) innerhalb des Gehäuses (11) vorgesehen ist, wobei der erste Wärmetauscher (40) mit einer dritten Wärmequelle verbindbar ist.

11. Heizzentrale gemäß Anspruch 9 oder 10,
**dadurch gekennzeichnet,**
**dass** die zweite Wärmequelle (20) ein Brennwertkessel, insbesondere ein durch Öl oder Gas betriebener Brennwertkessel oder ein Durchlauferhitzer, ist.

12. Heizzentrale gemäß einem der Ansprüche 9 bis 11,
**dadurch gekennzeichnet,**
**dass** ein Anschluss (50) am Pufferspeicherbehälter (10) vorgesehen ist, mittels dessen eine vierte Wärmequelle, insbesondere ein Feststoffbrenner, eine Pelletsheizung, ein Kamin oder eine Abwärmeheizung, mit dem Pufferspeicherbehälter (10) zum Wärmeaustausch verbindbar ist.

13. Heizzentrale gemäß einem der Ansprüche 9 bis 12,
**dadurch gekennzeichnet,**
**dass** die Heizzentrale (80) eine Regelungseinrichtung umfasst, die zur Regelung der verschiedenen Wärmequellen (30, 20) ausgebildet ist.
